# EUROPÄISCHE PATENTSCHRIFT

(11) **EP 2 505 973 B1**
(45) Veröffentlichungstag und Bekanntmachung des Hinweises auf die Patenterteilung: **11.07.2018**
(21) Anmeldenummer: 11165484.4
(22) Anmeldetag: 10.05.2011
(51) Int. Cl.: G01J 3/51, G01J 3/02, G01J 3/50

(54) **Handfarbmessgerät**
Hand-held colour measurement device
Colorimètre manuel

(30) Priorität: 01.04.2011 US 201113078328
(43) Veröffentlichungstag der Anmeldung: 03.10.2012
(73) Patentinhaber: X-Rite Switzerland GmbH, 8105 Regensdorf (CH)
(72) Erfinder: Zhou, Wang-Long, Andover, MA 01810 (US); Masia, Andrew, Newburyport, MA 01950 (US); Frick, Beat, 8107 Buchs (CH)
(74) Vertreter: Schwabe - Sandmair - Marx

(56) Entgegenhaltungen:
- JP-A- 6 273 232
- JP-A- 2009 300 257
- JP-A- 2010 002 255
- US-A- 4 834 541
- US-A- 4 835 381
- US-A- 5 739 914
- US-A1- 2007 063 132

## Beschreibung

Die Erfindung betrifft eine opto-elektronische Messeinheit für ein Farbmessgerät, insbesondere ein Handfarbmessgerät zur Ausmessung von Monitoren, Projektoren, Projektionsflächen und Umgebungslicht, gemäss dem Oberbegriff des unabhängigen Anspruchs 1.

Handfarbmessgeräte der gattungsgemässen Art sind in zahlreichen Ausführungsvarianten auf dem Markt. Solche Handfarbmessgeräte können auf beliebigen Messtechnologien basieren. Sie können z.B. als Filter- oder als Spektralmessgeräte ausgebildet sein, wobei letztere am universellsten sind, da aus Spektralmesswerten bekanntlich alle anderen in der Praxis interessierenden Grössen (z.B. Farbwerte, Farbdichtewerte etc.) ableitbar sind. Handfarbmessgeräte können ferner als autonome Geräte oder als Messperipherie zum Einsatz in Verbindung mit einem steuernden und Messresultate verarbeitenden Rechner ausgebildet sein. Autonome Handfarbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Handfarbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Handfarbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann. Ein solches Messgerätekonzept ist z.B. in US-PS Nr. 7 671 991 (≈ EP 1 845 350 B1) beschrieben.

Handfarbmessgeräte der gattungsgemässen Art sind je nach Ausbildung und Zubehör für viele Messaufgaben einsetzbar. Ein spezielles Einsatzgebiet solcher Handfarbmessgeräte ist die Messung an Monitoren, speziell zum Zwecke der Kalibration und zur Erstellung von Farbprofilen. Das Handfarbmessgerät wird dabei manuell an dem zu messenden Monitor positioniert, wobei es den Monitor berührt oder in einem kleinen Abstand (vorzugsweise weniger als 20cm) vom Monitor angeordnet ist. Ferner können Handfarbmessgeräte in weiteren Anwendungsfunktionen auch zur Messung des Umgebungslichts oder ev. auch für (Fern-)Messungen an einer Projektionsfläche verwendet werden, welche z.B. von einem elektronischen Projektor (Beamer) beleuchtet wird. Diese Punkte sind ebenfalls z.B. in US-PS Nr. 7 671 991 (≈ EP 1 845 350 B1) beschrieben. Diese Offenbarung beschreibt auch eine mögliche Anbringung der Messelektronik.

Messeinheiten für Handfarbmessgeräte sind weiterhin aus der JP2010 002255A und der JP 2009 300257A bekannt.

Für die Farbmessung an Monitoren werden besondere Anforderungen an ein Farbmessgerät gestellt. So soll das Messgerät z.B. einen relativ grossen Messfleck aufweisen, damit lokale Inhomogenitäten des Monitors durch Mittelung reduziert werden können. Ferner ist ein relativ kleiner und für alle Farben gleicher Akzeptanzwinkel (Einfallswinkelbereich) von typisch +/- 4° wünschenswert. Das Gerät darf möglichst keinen sog. Pointing Error aufweisen, d.h. alle Farbkanäle des Geräts müssen denselben Winkelbereich sehen. Globale Inhomogenitäten dürfen nicht zu Farbartefakten führen. Ein Farbartefakt tritt auf, wenn die Empfindlichkeiten der Farbkanäle R,G,B bzw. X,Y,Z des Monitors örtlich oder im Winkel nicht perfekt auf einander liegen, so dass reine Helligkeitsschwankungen in Ort oder Winkel fälschlicherweise als Farbvariationen dargestellt werden. Monitore mit starker Winkelabhängigkeit sind hier besonders kritisch. Das Farbmessgerät muss unempfindlich sein auf Polarisation des Messlichts. Es soll ferner eine hohe Lichtempfindlichkeit aufweisen. Gleichzeitig soll es möglichst unempfindlich sein gegen klimatische und mechanische Einflüsse. Weitere Anforderungen ergeben sich aus dem immer stärker vordringenden Einsatz solcher Geräte in den semi-professionellen und privaten Bereich: Das Farbmessgerät soll klein, kompakt und handlich und langzeitstabil sein, muss sich einfach an einen externen Rechner anschliessen lassen und muss schliesslich auch noch möglich kostengünstig herstellbar sein.

Durch die vorliegende Erfindung sollen nun eine für ein Handfarbmessgerät vorgesehene opto-elektronische Messeinheit sowie ein mit einer solchen opto-elektronischen Messeinheit ausgestattes Handfarbmessgerät geschaffen werden, welche die vorstehend genannten Anforderungen in höchstem Masse erfüllen.

Diese der Erfindung zugrundeliegende Aufgabe wird durch die Merkmale des unabhängigen Anspruchs 1 gekennzeichnete erfindungsgemässe opto-elektronische Messeinheit gelöst.

Vorteilhafte Ausgestaltungen und Weiterbildungen der erfindungsgemässen opto-elektronischen Messeinheit und des erfindungsgemässen Handfarbmessgeräts sind Gegenstand der abhängigen Ansprüche.

Bezüglich der opto-elektronischen Messeinheit besteht das Wesen der Erfindung in Folgendem: Eine opto-elektronische Messeinheit für ein Farbmessgerät, insbesondere ein Handfarbmessgerät zur Ausmessung von Monitoren, Projektoren, Projektionsflächen und Umgebungslicht, umfasst eine Optikanordnung zum Empfangen von von einem Messobjekt ausgehendem Messlicht und eine vom Messlicht beaufschlagte Sensoranordnung, welche das Messlicht in entsprechende elektrische Messsignale umwandelt und diese Messsignale zu die Farbe des Messobjekts charakterisierenden digitalen Messdaten verarbeitet. Die eine optische Achse aufweisende Messeinheit besteht aus einer konvexen, vorzugsweise asphärischen Eingangslinse mit einem verhältnismässig grossen Durchmesser, einer Blende zur Begrenzung des Einfallswinkelbereichs auf +/- 2°-10°, einem depolarisierend wirkenden optischen Diffusor, einer Sensor-Linse mit einem gegenüber der Eingangslinse typischerweise kleineren Durchmesser und mindestens drei durch Farbfilter auf unterschiedliche spektrale Empfindlichkeiten sensibilisierte photoelektrische Sensoren. Die Blende liegt im Wesentlichen in der Brennebene der Eingangslinse, der optische Diffusor ist im Strahlengang in unmittelbarer Nähe der Blende und im Wesentlichen in der Brennebene der Sensor-Linse angeordnet. Die Filter und die Sensoren sind nahe der optischen Achse angeordnet und werden mit im Wesentlichen parallelem Messlicht beaufschlagt. Die spektralen Sensitivitäten der Farbkanäle, resultierend aus den Filterspektren, den spektralen Sensitivitäten der verwendeten Sensoren und der spektralen Transmission von allen weiteren Optikkomponenten, d.h. von den Linsen und dem Diffusor, sind im Wesentlichen auf die spektralen Charakteristiken der Color Matching Functions nach CIE 1931 ausgelegt, so dass die von den Sensoren erzeugten elektrischen Messsignale im Wesentlichen Tristimulus-Farbwerte XYZ nach CIE darstellen. Die einzelnen Farbkanäle bzw. spektralen Empfindlichkeiten können anstatt der XYZ Charakteristika auch eine Linearkombination derselben haben.

Vorteilhafterweise sind die Sensoren in einem Abstand von der Sensor-Linse angeordnet, welcher im Wesentlichen der Brennweite der Sensor-Linse entspricht.

Bevorzugt begrenzt die Blende den Einfallswinkelbereich auf +/- 4°-6°.

Gemäss einer vorteilhaften Ausführungsform besteht der optische Diffusor aus einem molekular streuenden Material mit vielen Streuzentren mit sehr kleinem Streuwinkel, insbesondere Polyoxymethylen. Vorteilhafterweise ist der optische Diffusor als dünnes Plättchen mit einer Plättchendichte von 0.2-0.6 mm, insbesondere rund 0.4 mm ausgebildet. Der optische Diffusor hat vorteilhafterweise eine Transluzenz von mindestens 25%, vorzugsweise mindestens 50%. Ferner ist es vorteilhaft, wenn der optische Diffusor das ihn durchsetzende Licht zu mindestens 95%, vorzugsweise mindestens 99% depolarisiert.

Die Eingangslinse ist so ausgebildet, dass sie paralleles Licht auf einen Punkt abbildet. Die Sensor-Linse ist so ausgebildet und angeordnet, dass sie vom Diffusor divergierend abgestrahltes Licht nach Unendlich abbildet.

Vorteilhafterweise sind die Farbfilter als Transmissionsfilter mit dielektrischem Schichtaufbau ausgebildet.

Ferner ist es vorteilhaft, wenn die Farbfilter in einem Einsatz positioniert und fixiert sind, welcher die Farbfilter und die Sensoren jeweils gegenseitig abschottet und vor Fremdlichtbeaufschlagung sowie gegenseitigem Streulicht schützt.

Hinsichtlich des Handfarbmessgeräts besteht das Wesen der Erfindung in Folgendem: Ein Handfarbmessgerät umfasst ein Gehäuse, in dem sich eine opto-elektronische Messeinheit befindet, welche von einem Messobjekt ausgehendes Messlicht durch ein Messfenster des Gehäuses empfängt, in entsprechende elektrische Messsignale umwandelt, diese Messsignale zu die Farbe des Messobjekts charakterisierenden digitalen Messdaten verarbeitet und über eine Kommunikationsschnittstelle zur Verfugung stellt. Die opto-elektronische Messeinheit ist dabei mit einem oder mehreren Merkmalen gemäss den vorstehenden Erläuterungen ausgestattet. Für Umgebungslichtmessungen ist dabei vorteilhafterweise am Gehäuse ein der Eingangslinse der Messeinheit vorsetzbar angeordneter externer Diffusor vorgesehen.

Im Folgenden wird die Erfindung anhand eines in der Zeichnung dargestellten Ausführungsbeispiels näher erläutert. Es zeigen:
- Fig. 1: einen Schnittdarstellung des erfindungsgemässes Handfarbmessgeräts mit einer erfindungsgemässen opto-elektronischen Messeinheit,
- Fig. 2: eine schematische Darstellung der opto-elektrischen Messeinheit des Handfarbmessgeräts der Fig. 1,
- Fig. 3: eine aufgeschnittene Schrägansicht der opto-elektrischen Messeinheit des Handfarbmessgeräts der Fig. 1,
- Fig. 4: einen Axialschnitt durch die opto-elektrischen Messeinheit des Handfarbmessgeräts der Fig. 1,
- Fig. 5: ein Detail aus Fig. 4 in vergrösserter Darstellung und
- Fig. 6: eine explodierte Darstellung einiger Komponenten der opto-elektrischen Messeinheit.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter Messobjekt werden mit dem Handfarbmessgerät auszumessende Lichtquellen jeglicher Art verstanden, insbesondere Monitore, durch Projektoren angestrahlte Projektionsflächen und Umgebungslicht.

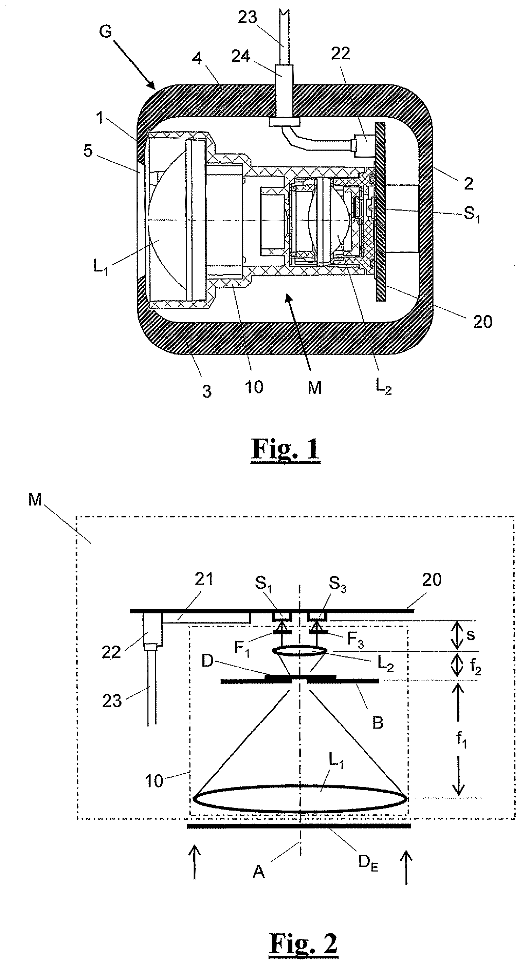

Die äussere Gestalt des erfindungsgemässen Handfarbmessgeräts ist am besten aus Fig. 1 erkennbar. Das Gerät umfasst ein als Ganzes mit G bezeichnetes Gehäuse mit einer im Wesentlichen ebenen Vorderwand 1, einer zu dieser parallelen und ebenfalls im Wesentlichen ebenen Hinterwand 2, einer im Wesentlichen ebenen unteren Wand 3, einer dazu parallelen, ebenfalls im Wesentlichen ebenen oberen Wand 4 und zwei (nicht dargestellten) etwas nach aussen gekrümmten Seitenwänden.

Im Gehäuse G ist eine als Ganze mit M bezeichnete opto-elektronische Messeinheit untergebracht und durch nicht dargestellte Halteelemente örtlich fixiert. Die Messeinheit M umfasst einen zweifach abgestuften Tubus 10 mit diversen optischen Komponenten sowie eine am einen Ende des Tubus 10 befestigte Printplatte 20, auf der photoelektrische Sensoren S₁-S₄ angeordnet sind (Fig. 2), die über die optischen Komponenten mit Messlicht beaufschlagt werden und dieses in entsprechende elektrische Messsignale umwandeln. Eine mit den Sensoren zusammenarbeitende Messelektronik 21 (Fig. 2) auf der Printplatte 20 steuert die Sensoren an und stellt deren Messsignale in digitalisierter Form an einer Kommunikationsschnittstelle 22 zur Verfügung. An die z.B. als USB-Schnittstelle ausgebildete Kommunikationsschnittstelle 22 ist ein Kabel 23 angeschlossen und in einer schützenden und zugentlastenden Kabeltülle 24 durch die obere Wand 4 des Gehäuses G hindurch nach aussen geführt.

In der Vorderwand 1 des Gehäuses G ist ein Messfenster 5 vorgesehen, durch welches Messlicht in die Messeinheit M eintreten kann. Die opto-elektronische Messeinheit empfängt von einem Messobjekt ausgehendes Licht, wandelt dieses in entsprechende elektrische Messsignale um, verarbeitet diese Messsignale zu die Farbe des Messobjekts charakterisierenden digitalen Messdaten und stellt diese Messdaten über die Kommunikationsschnittstelle und das daran angeschlossene Kabel einem externen Gerät, beispielsweise einem externen Rechner zur Verfügung. Über das Kabel erfolgt auch die Stromversorgung der Messelektronik.

In dieser allgemeinen Form entspricht das erfindungsgemässe Handfarbmessgerät inklusive Messelektronik im Wesentlichen den bekannten, z.B. in der eingangs erwähnten US-PS Nr. 7 671 991 beschriebenen Messgeräten dieser Art und bedarf deshalb so weit keiner näheren Erläuterung. Der Unterschied zum bekannten Stand der Technik besteht in der speziellen Ausgestaltung der opto-elektronischen Messeinheit M, welche im Folgenden in allen wesentlichen Einzelheiten beschrieben ist.

Das erfindungsgemässe messtechnische Konzept der opto-elektronischen Messeinheit M ist schematisch in Fig. 2 dargestellt. Im schon genannten Tubus 10 sind im Messstrahlengang aufeinanderfolgend eine Eingangslinse L₁, eine Blende B, ein Diffusor D, eine Sensor-Linse L₂, drei Farbfilter F₁-F₃ und vier photoelektrische Sensoren S₁-S₄ angeordnet, wobei die vier Sensoren auf der am Tubusende befestigten Printplatte 20 montiert und mit der ebenfalls auf der Printplatte befindlichen Messelektronik 21 elektrisch verbunden sind.

Selbstverständlich kann die Anzahl der Kanäle, die mit einem Filter bestückt sind, auch vier oder mehr (typisch 3...12) betragen. Ebenso können Kanäle ohne Filter vorhanden sein, die dann mit speziellen Sensoren bestückt sein können, z.B. zur Messung von ultraviolettem Licht oder zur schnellen Messung von gegebenenfalls zeitlich variierendem oder pulsierendem Messlicht.

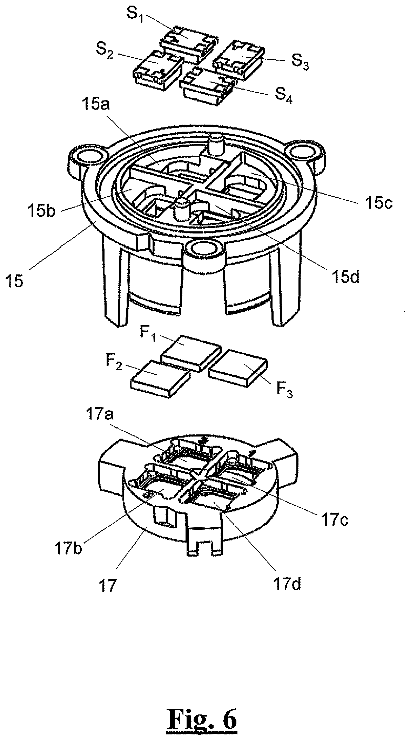

Die drei Farbfilter F₁-F₃ und die vier Sensoren S₁-S₄ sind nahe der optischen Achse A der Messeinheit M angeordnet. Die drei Farbfilter F₁-F₃ sind je einem der drei Sensoren S₁-S₃ zugeordnet bzw. vorgeschaltet, der vierte Sensor S₄ (Fig. 6) ist filterlos. Die vier Sensoren S₁-S₄ sind an sich konventionell und beispielsweise als kleine, auf einem Chip integrierte Schaltungen in CMOS-Technologie ausgebildet. Geeignete Sensoren sind z.B. Sensoren des Typs TSL238T High-Sensitivity Light-to-Frequency Converter der Firma TAOS.

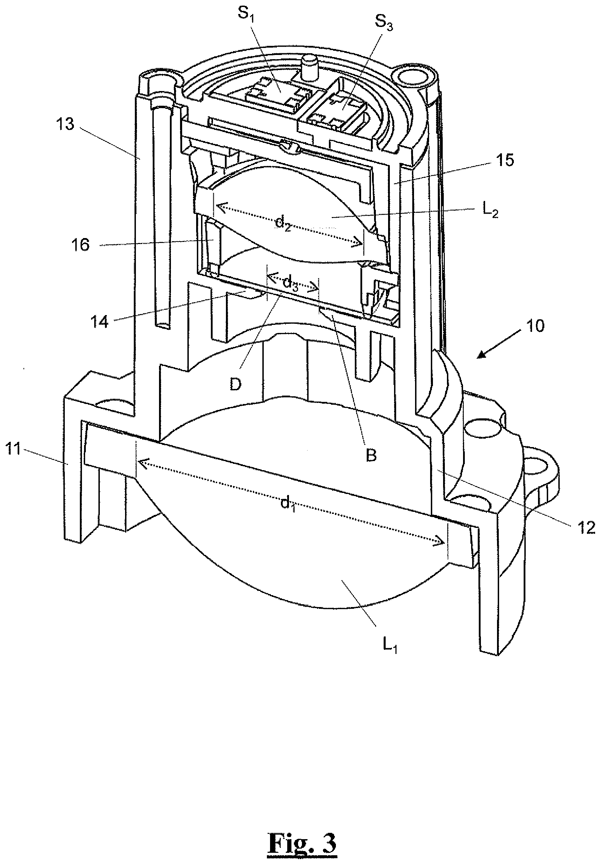

Die unmittelbar hinter dem Messfenster 5 angeordnete Eingangslinse L₁ ist konvex und nach Bedarf asphärisch ausgebildet und ist darauf optimiert, durch das Messfenster in sie eintretendes paralleles Messlicht auf einen Punkt abzubilden. Die Eingangslinse L₁ ist relativ gross und besitzt einen Durchmesser d₁ von z.B. etwa 25 mm (Fig. 3). Die Brennweite f₁ der Eingangslinse L₁ beträgt typisch etwa 20-30 mm, insbesondere etwa 24-26 mm.

Die Blende B befindet sich in der Brennebene der Eingangslinse L1. Der Öffnungsdurchmesser d₃ (Fig. 3) der Blende B beträgt typisch etwa 3-5 mm, insbesondere etwa 4 mm. Die Blende B begrenzt den Einfallswinkelbereich (Sichtwinkel) der Messeinheit, wobei die Brennweite f₁ der Eingangslinse L₁ und der Öffnungsdurchmesser d₃ der Blende B so auf einander abgestimmt sind, dass sich ein Einfallswinkelbereich von etwa +/- 2°-10°, vorzugsweise etwa +/- 4°-6° ergibt. Damit und in Verbindung mit dem relativ grossen Durchmesser der Eingangslinse L1 wird ein relativ grosser Messfleck von typisch etwa 2.5 cm Durchmesser realisiert, der für Messungen an Monitoren vorteilhaft ist, weil dadurch lokale Inhomogenitäten ausgemittelt werden.

Der Diffusor D ist im Messstrahlengang in unmittelbarer Nähe der Blende B angeordnet. Er besteht aus einem dünnen Plättchen aus einem transluzenten, streuenden und depolarisierenden Material. Die Plättchendicke des Diffusors D beträgt etwa 0.2-0.6 mm, vorzugsweise rund 0.4 mm. Vorzugsweise ist der Diffusor D so ausgebildet, dass er eine Transluzenz von mindestens 25%, vorzugsweise mindestens 50% aufweist und durchgehendes Licht fast vollständig (typisch mindestens 95%, vorzugsweise 99% und mehr) depolarisiert. Der Diffusor D ist ferner so ausgebildet, dass er eine gute Mischung über alle Einfallswinkel bewirkt und eine geringe Temperatur- und Feuchtigkeitsempfindlichkeit aufweist. Besonders bevorzugt besteht der Diffusor D aus einem dünnen Plättchen eines molekular streuenden Materials mit vielen Streuzentren mit sehr kleinem Streuwinkel, beispielsweise etwa Polyoxymethylen (POM), das z.B. unter der Markenbezeichnung DELRIN ® von der Firma DuPont erhältlich ist. Überraschend ist, dass ein Diffusor aus diesem Material selbst bei den angegebenen sehr geringen Plättchendicken noch einen Depolarisationsgrad von über 95% aufweist.

Die aus der Eingangslinse L₁, der Blende B und dem Diffusor D bestehende erste Gruppe von optischen Komponenten wirkt als Aufpick-Optik für das Messlicht. Die aus der Sensor-Linse L₂ und die Farbfilter F₁-F₃ bilden die auf die Aufpick-Optik folgende Sensor-Optik. Der Diffusor D wirkt für die Sensor-Optik als sekundäre Lichtquelle, wobei das Licht diffus abgestrahlt wird und (praktisch vollständig) depolarisiert ist. Das abgestrahlte Licht hat somit seinen ursprünglichen Einfallswinkel und seine Eingangspolarisation (sofern vorhanden) "vergessen". Das Licht tritt an der Rückseite des Diffusors D (nahezu) an derselben Stelle aus, wo es an der Vorderseite in den Diffusor eingetreten ist. Das Licht hat demnach seinen Einfallspunkt auf den Diffusor D nicht "vergessen". Diese Problematik ist durch die nachstehend beschriebene telezentrische Ausbildung der Sensor-Optik gelöst, welche bewirkt, dass alle Sensoren Licht von allen Punkten des Diffusors D erhalten, jeder Sensor also Licht vom gesamten Diffusor empfängt. Alle Punkte des Diffusors D werden dabei gleich stark bewertet.

Die Sensor-Linse L₂ ist im Messstrahlengang so angeordnet, dass der Diffusor D in der Brennebene der Sensor-Linse L₂ liegt. Die Sensor-Linse L₂ besitzt typischerweise einen kleineren Durchmesser d₂ als die Eingangslinse L₁ und hat eine Brennweite f₂ von etwa 3-8 mm, vorzugsweise etwa 6.5 mm. Die Sensor-Linse L₂ ist darauf optimiert, vom als sekundäre Lichtquelle wirkenden Diffusor D divergierend abgestrahltes Licht nach Unendlich abzubilden. Dadurch passiert das Licht die Farbfilter F₁-F₃ in einem Konus mit einer zur Oberfläche der Farbfilter senkrechten Achse, wobei der Öffnungswinkel des Konus typisch etwa +/- 10° - 20° beträgt. Die Sensor-Linse L₂ ist ferner so ausgebildet und angeordnet bzw. darauf optimiert, dass die Sensoren S₁-S₄ mit Licht beaufschlagt werden, das aus parallel emittiertem Licht des Diffusors D resultiert.

Die Sensoren S₁-S₄ sind in einem Abstand s von der Sensor-Linse L₂ angeordnet, der im Wesentlichen der Brennweite f2 der Sensor-Linse L₂ entspricht.

Die Farbfilter F₁-F₃ sind als Transmissionsfilter mit dielektrischem Schichtaufbau ausgebildet, welcher sehr präzise die jeweilige Transmissionskurve bestimmt. Solche Transmissionsfilter haben ferner den Vorteil, dass sie sehr temperatur- und feuchtigkeitsstabil hergestellt werden können. Die Transmissionscharakteristiken solcher Farbfilter sind bekanntlich stark einfallswinkelabhängig. Dadurch, dass das Messlicht die Farbfilter praktisch senkrecht zur Filteroberfläche beaufschlagt, ist der Einsatz solcher Filter begünstigt bzw. überhaupt erst möglich.

Die spektrale Empfindlichkeit des Farbmessgeräts soll dem Standard-Beobachter entsprechen, wie er in CIE 1931 definiert ist. Die spektrale Empfindlichkeit des Farbmessgeräts ergibt sich im Wesentlichen aus der spektralen Transmission der Farbfilter und der spektralen Empfindlichkeit der eingesetzten Sensoren. Im Weiteren trägt auch die Transmission der Linsen und des Diffusors dazu bei.

Die spektralen Sensitivitäten der drei Farbkanäle, die mit den Farbfiltern F₁-F₃ bestückt sind, entsprechen den Color Matching Functions des Standard-Beobachters nach CIE 1931. Dies hat zur Folge, dass die von den Sensoren S₁-S₃ erzeugten Messsignale direkt den Tristimulus-Farbwerten XYZ nach CIE entsprechen. Selbstverständlich können die Farbkanalempfindlichkeiten anstatt der XYZ-Charakteristika auch eine Linearkombination derselben haben.

Dem vierten Sensor S₄ ist kein Farbfilter vorgeschaltet, er empfängt also ungefiltertes Licht. Die Messwerte des vierten Sensors können z.B. für farbunabhängige Helligkeitsmessungen ausgewertet werden. Ebenso ist der Sensor dazu geeignet, variierendes Messlicht schnell zu erkennen.

Der körperliche Aufbau der Messeinheit M ist aus den Figuren 3-6 ersichtlich. Zentrales tragendes Element ist der schon genannte, drei abgestufte Abschnitte 11, 12 und 13 aufweisende Tubus 10. Im vorderen Abschnitt 11 ist die Eingangslinse L₁ gefasst. Etwa in der Mitte des Tubus 10 ist im hinteren Abschnitt 13 eine Lochwand 14 vorgesehen, welche die Blende B bildet. Im hinteren Ende des hinteren Tubusabschnitts 13 ist ein Einsatz 15 angeordnet. Die Printplatte 20 ist auf dem Einsatz 15 befestigt und schliesst den Tubus 10 ab. Die Begriffe "vorne" und "hinten" beziehen sich auf den Messstrahlengang, wobei "vorne" als eingangsseitig und "hinten" als sensorseitig zu verstehen ist. Ein Stützring 16 im hinteren Tubusabschnitt 13 klemmt den Diffusor D gegen die Rückseite der Lochwand 14 und bildet eine Auflage für die Sensor-Linse L₂, die auf der gegenüberliegenden Seite durch den Einsatz 15 festgehalten ist.

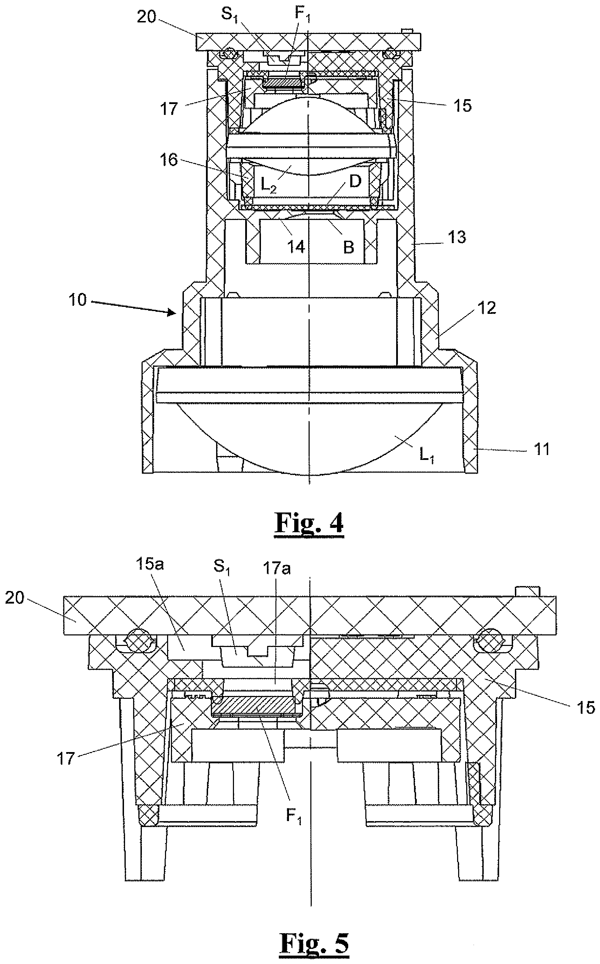

Der in Fig. 5 in grösserem Massstab abgebildete Einsatz 15 dient einerseits zur Halterung der Farbfilter F₁-F₃ und anderseits zur optischen Isolierung der Farbfilter und der Sensoren untereinander und auch gegenüber Fremdlicht, das zum Beispiel von den Tubusinnenwänden zurückgestrahlt werden könnte. Der Einsatz 15 ist mit zwei gekreuzten Zwischenwänden versehen, welche ihn in vier optisch getrennte Kammern 15a-15d aufteilen, wie dies am besten aus der Explosionsdarstellung der Fig. 6 erkennbar ist. Die Sensoren S₁-S₄ befinden sich innerhalb je einer dieser Kammern. Im Einsatz 15 ist ferner ein Filterhalter 17 befestigt, der mit vier gegeneinander optisch isolierten Fenstern 17a-17d versehen ist. Die drei Farbfilter F₁-F₃ sind in je einem der drei Fenster 17a-17c montiert, das vierte Fenster 17d ist leer.

Das erfindungsgemässe Handfarbmessgerät ist speziell geeignet für die Messung der Leuchtdichte und der Tristimulus-Farbwerte XYZ der Leuchtdichte eines Bildschirms (Monitors) oder einer von einem Projektor beleuchteten Projektionsfläche. Diese Messungen können für verschiedene Aussteuerungen des Bildschirms oder Projektors durchgeführt werden, und die dabei gewonnenen Messdaten können z.B. für die Erstellung von Farbprofilen herangezogen werden.

Das Handfarbmessgerät kann auch für Umgebungslichtmessungen und die Messung der Beleuchtungsstärke und der Tristimulus-Farbwerte der Beleuchtungsstärke auf einer Arbeitsfläche eingesetzt werden. In diesen Anwendungsfällen wird der Eingangslinse L₁ ein externer Diffusor vorgesetzt, wie dies in Fig. 2 schematisch dargestellt ist. Der externe Diffusor D_{E} kann vorteilhafterweise am Gehäuse G vorgesehen und dort so angeordnet sein, dass er im Bedarfsfall z.B. mittels eines geeigneten Schwenk- oder Schiebemechanismus vor dem Messfenster 5 des Gehäuses positioniert und dann wieder von dort entfernt werden kann.

Das erfindungsgemässe Handfarbmessgerät ist ein echtes Kolorimeter (gemäss dem CIE Normalbetrachter) und erfüllt die eingangs aufgezählten Anforderungen in einem kompakten und handlichen Gerät mit USB-Anschluss. Mit dem Handfarbmessgerät durchgeführte Messungen an Monitoren sind unabhängig von der zugrundeliegenden Monitor-Technologie. Da die Primärfarben von verschiedenen Monitor-Typen sehr unterschiedlich sein können, sind die im erfindungsgemässen Farbmessgerät verwendeten echten Color Matching Function Farbfilter sehr vorteilhaft. Mit dem erfindungsgemässen Farbmessgerät durchgeführte Messungen an einem Monitor sind unabhängig von der Messposition und der Monitor-Orientierung und daher extrem reproduzierbar. Monitor-Messungen und darauf basierende Kalibrierungen sind unabhängig vom Polarisationsgrad des vom Monitor abgestrahlten Lichts. Dies ist ein weiterer wichtiger Vorteil, da gerade LCD-, OLED-, AMOLED- und weitere Monitor-Typen sehr starke lineare oder zirkulare Polarisation zeigen.

## Patentansprüche

1. Opto-elektronische Messeinheit (M) für ein Farbmessgerät, insbesondere ein Handfarbmessgerät zur Ausmessung von Monitoren, Projektoren, Projektionsflächen und Umgebungslicht, mit einer Optikanordnung (L₁, B, D) zum Empfangen von von einem Messobjekt ausgehendem Messlicht und mit einer vom Messlicht beaufschlagten Sensoranordnung (L₂, F₁, F₂, F₃, S₁, S₂, S₃, 20, 21), welche das Messlicht in entsprechende elektrische Messsignale umwandelt und diese Messsignale zu die Farbe des Messobjekts charakterisierenden digitalen Messdaten verarbeitet, wobei die eine optische Achse (A) aufweisende Messeinheit (M) aus einer konvexen Eingangslinse (L₁) mit einem verhältnismäßig großen Durchmesser (d₁), einer Blende (B) zur Begrenzung des Einfallswinkelbereichs auf +/- 2°-10°, einer Sensor-Linse (L₂) und mindestens drei durch Farbfilter (F₁, F₂, F₃) auf unterschiedliche spektrale Empfindlichkeiten sensibilisierte photoelektrische Sensoren (S₁, S₂, S₃) besteht, wobei die Blende (B) im Wesentlichen in der Brennebene der Eingangslinse (L₁) liegt, wobei die Filter (F₁, F₂, F₃) und die Sensoren (S₁, S₂, S₃) nahe der optischen Achse (A) angeordnet sind und mit im Wesentlichen parallelem Messlicht beaufschlagt werden und wobei die Filter (F₁, F₂, F₃), und die Sensoren (S₁, S₂, S₃) so ausgelegt sind, dass die von den Sensoren (S₁, S₂, S₃) erzeugten elektrischen Messsignale im Wesentlichen die Tristimulus-Farbwerte XYZ nach CIE oder eine Linearkombination dieser Tristimulus-Farbwerte XYZ darstellen;
**dadurch gekennzeichnet, dass**:
die Messeinheit (M) weiter aufweist
einen depolarisierend wirkenden optischen Diffusor (D),
wobei der optische Diffusor (D) im Strahlengang in unmittelbarer Nähe der Blende (B) und im Wesentlichen in der Brennebene der Sensor-Linse (L₂) angeordnet ist,
wobei der Diffusor (D) so ausgelegt ist, dass die von den Sensoren (S₁, S₂, S₃) erzeugten elektrischen Messsignale im Wesentlichen die Tristimulus-Farbwerte XYZ nach CIE oder eine Linearkombination dieser Tristimulus-Farbwerte XYZ darstellen;
die Sensoren (S₁, S₂, S₃) in einem Abstand (s) von der Sensor-Linse (L₂) angeordnet sind, welcher im Wesentlichen der Brennweite (f₂) der Sensor-Linse (L₂) entspricht;
die Messeinheit (M) weiter aufweist:
einen in drei Abschnitte abgestuften Tubus (10) mit den vorgenannten optischen Komponenten;
eine Messelektronik (21), die die Sensoren (S₁, S₂, S₃) steuert;
eine Printplatte (20) auf der die Messelektronik (21) angeordnet ist; und
eine Kommunikationsschnittstelle (22) auf der Printplatte (20);
wobei die Messelektronik (21) die Messsignale der Sensoren (S₁, S₂, S₃) in digitaler Form der Kommunikationsschnittstelle (22) zur Verfügung stellt,
wobei die Sensoren (S₁, S₂, S₃) auf der Printplatte (20) montiert und mit der Messelektronik (21) elektrisch verbunden sind; und
wobei die Printplatte (20) an einem Ende des Tubus (10) befestigt ist.

2. Messeinheit (M) nach einem der vorangehenden Ansprüche, **dadurch gekennzeichnet, dass** die Blende (B) den Einfallswinkelbereich auf +/- 4°-6° begrenzt.

3. Messeinheit (M) nach einem der vorangehenden Ansprüche, **dadurch gekennzeichnet, dass** zusätzlich zu den Sensoren (S₁, S₂, S₃) ein Sensor (S₄) ohne vorgeschalteten Farbfilter vorgesehen ist.

4. Messeinheit (M) nach einem der vorangehenden Ansprüche, **dadurch gekennzeichnet, dass** der optische Diffusor (D) als dünnes Plättchen mit einer Plättchendicke von 0.2-0.6 mm, insbesondere rund 0.4 mm ausgebildet ist, und dass der optische Diffusor (D) aus Polyoxymethylen besteht.

5. Messeinheit (M) nach einem der vorangehenden Ansprüche, **dadurch gekennzeichnet, dass** der optische Diffusor (D) zu mindestens 25%, vorzugsweise mindestens 50% transluzent ist.

6. Messeinheit (M) nach einem der vorangehenden Ansprüche, **dadurch gekennzeichnet, dass** der optische Diffusor (D) das ihn durchsetzende Licht zu mindestens 95%, vorzugsweise mindestens 99% depolarisiert.

7. Messeinheit (M) nach einem der vorangehenden Ansprüche, **dadurch gekennzeichnet, dass** die Eingangslinse (L₁) eine Brennweite von 20-30 mm, insbesondere 24-26 mm aufweist.

8. Messeinheit (M) nach einem der vorangehenden Ansprüche, **dadurch gekennzeichnet, dass** die Eingangslinse (L₁) darauf optimiert ist, paralleles Licht auf einen Punkt abzubilden.

9. Messeinheit (M) nach einem der vorangehenden Ansprüche, **dadurch gekennzeichnet, dass** die Sensor-Linse (L₂) darauf optimiert ist, vom Diffusor (D) divergierend abgestrahltes Licht nach Unendlich abzubilden.

10. Messeinheit (M) nach einem der vorangehenden Ansprüche, **dadurch gekennzeichnet, dass** die Blende (B) einen Öffnungsdurchmesser von 3-5 mm, insbesondere rund 4 mm aufweist.

11. Messeinheit (M) nach einem der vorangehenden Ansprüche, **dadurch gekennzeichnet, dass** die Farbfilter (F₁, F₂, F₃) als Transmissionsfilter mit dielektrischem Schichtaufbau ausgebildet sind.

12. Messeinheit (M) nach einem der vorangehenden Ansprüche, **dadurch gekennzeichnet, dass** die Farbfilter (F₁, F₂, F₃) in einem Einsatz (15) positioniert und fixiert sind, welcher die Farbfilter (F₁, F₂, F₃) und die Sensoren (S₁, S₂, S₃) gegenseitig abschottet und vor Fremdlichtbeaufschlagung schützt.

13. Messeinheit (M) nach einem der vorangehenden Ansprüche, **dadurch gekennzeichnet, dass** die Eingangslinse (L₁) einen Durchmesser (d₁) von 25 mm aufweist.

14. Handfarbmessgerät mit einem Gehäuse (G), in dem sich eine opto-elektronische Messeinheit (M) befindet, welche von einem Messobjekt ausgehendes Messlicht durch ein Messfenster (5) des Gehäuses (G) empfängt, in entsprechende elektrische Messsignale umwandelt, diese Messsignale zu die Farbe des Messobjekts charakterisierenden digitalen Messdaten verarbeitet und über eine Kommunikationsschnittstelle (22) zur Verfügung stellt, **dadurch gekennzeichnet, dass** die opto-elektronische Messeinheit (M) gemäss einem der vorangehenden Ansprüche ausgebildet ist.

## Claims

1. An opto-electronic measuring unit (M) for a colour measuring device, in particular a hand-held colour measuring device for measuring monitors, projectors, projection surfaces, and ambient light, having an optical arrangement (L₁, B, D) for receiving measurement light originating from a measurement object, and having a sensor arrangement (L₂, F₁, F₂, F₃, S₁, S₂, S₃, 20, 21), to which measurement light is applied, which sensor arrangement converts the measurement light into corresponding electrical measurement signals and processes these measurement signals into digital measurement data that characterise the colour of the measurement object, wherein the measuring unit (M), having an optical axis (A), comprises a convex input lens (L₁) with a comparatively large diameter (d₁), an aperture (B) for restricting the angle of incidence to +/- 2°-10°, a sensor lens (L₂), and at least three photoelectric sensors (S₁, S₂, S₃), which are sensitised to different spectral sensitivities by means of colour filters (F₁, F₂, F₃), wherein the aperture (B) is essentially positioned in the focal plane of the input lens (L₁), wherein the filters (F₁, F₂, F₃) and the sensors (S₁, S₂, S₃) are arranged near the optical axis (A) and parallel measurement light is essentially applied to them, and wherein the filters (F₁, F₂, F₃) and the sensors (S₁, S₂, S₃) are configured such that the electrical measurement signals generated by the sensors (S₁, S₂, S₃) essentially represent the tristimulus colour values XYZ according to CIE, or a linear combination of these tristimulus colour values XYZ;
**characterised in that**:
the measuring unit (M) further comprises
an optical diffusor (D), which has a depolarising effect,
wherein the optical diffusor (D) is arranged in the optical path in immediate proximity of the aperture (B) and essentially in the focal plane of the sensor lens (L₂),
wherein the diffusor (D) is designed such that the electrical measurement signals generated by the sensors (S₁, S₂, S₃) essentially represent the tristimulus colour values XYZ according to CIE, or a linear combination of these tristimulus colour values XYZ;
the sensors (S₁, S₂, S₃) are arranged at a distance (s) from the sensor lens (L₂), which distance essentially corresponds to the focal length (f₂) of the sensor lens (L₂);
the measuring unit (M) further comprising:
a lens barrel (10) being sectioned into three sections having the aforementioned optical components;
measurement electronics (21), which control the sensors (S₁, S₂, S₃);
a printed circuit board (20) on which the measurement electronics (21) are arranged; and
a communication interface (22) on the printed circuit board (20);
wherein the measurement electronics (21) provide the measurement signals from the sensors (S₁, S₂, S₃) in digital form to the communication interface (22),
wherein the sensors (S₁, S₂, S₃) are mounted on the printed circuit board (20) and are electrically connected to the measurement electronics (21); and
wherein the printed circuit board (20) is fixed to one end of the lens barrel (10).

2. The measuring unit (M) according to any of the previous claims, **characterised in that** the aperture (B) restricts the angle of incidence area to +/- 4°-6°.

3. The measuring unit (M) according to any of the previous claims, **characterised in that** a sensor (S₄) with no upstream colour filter is provided in addition to the sensors (S₁, S₂, S₃).

4. The measuring unit (M) according to any of the previous claims, **characterised in that** the optical diffusor (D) is configured as a thin plate having a plate thickness of 0.2-0.6 mm, in particular about 0.4 mm, and **in that** the optical diffusor (D) is made of polyoxymethylene.

5. The measuring unit (M) according to any of the previous claims, **characterised in that** the optical diffusor (D) is translucent at at least 25%, preferably at least 50%.

6. The measuring unit (M) according to any of the previous claims, **characterised in that** the optical diffusor (D) depolarises the light which permeates it, at at least 95%, preferably at least 99%.

7. The measuring unit (M) according to any of the previous claims, **characterised in that** the input lens (L₁) has a focal length of 20-30 mm, in particular 24-26 mm.

8. The measuring unit (M) according to any of the previous claims, **characterised in that** the input lens (L₁) is optimised to display parallel light onto a point.

9. The measuring unit (M) according to any of the previous claims, **characterised in that** the sensor lens (L₂) is optimised to display light, which is divergently emitted from the diffusor (D), to infinity.

10. The measuring unit (M) according to any of the previous claims, **characterised in that** the aperture (B) has an opening diameter of 3-5 mm, in particular of about 4 mm.

11. The measuring unit (M) according to any of the previous claims, **characterised in that** the colour filters (F₁, F₂, F₃) are configured as transmission filters having a dielectric layer structure.

12. The measuring unit (M) according to any of the previous claims, **characterised in that** the colour filters (F₁, F₂, F₃) are positioned and fixed in an insert (15), which isolates the colour filters (F₁, F₂, F₃) and the sensors (S₁, S₂, S₃) from one another and protects them from extraneous light being applied.

13. The measuring unit (M) according to any of the previous claims, **characterised in that** the input lens (L₁) has a diameter (d₁) of 25 mm.

14. A hand-held colour measurement device having a housing (G), in which an opto-electronic measuring unit (M) is located, which receives measurement light being emitted from a measurement object through a measurement window (5) of the housing (G), converts said light into electrical measurement signals, processes these measurement signals into digital measurement data which characterise the colour of the measurement object, and provides them via a communication interface (22), **characterised in that** the opto-electronic measuring unit (M) is configured according to any of the previous claims.

## Revendications

1. Unité de mesure opto-électronique (M) pour un colorimètre, en particulier un colorimètre portable pour le mesurage de moniteurs, de projecteurs, de surfaces de projection et de la lumière ambiante, avec un agencement optique (L₁, B, D) pour la réception d'une lumière de mesure émise par un objet de mesure et avec un agencement de capteurs (L₂, F₁, F₂, F₃, S₁, S₂, S₃, 20, 21), soumis à l'effet de la lumière de mesure, qui convertit la lumière de mesure en des signaux de mesure électriques correspondants et traite ces signaux de mesure en des données de mesure numériques caractérisant la couleur de l'objet de mesure, dans laquelle l'unité de mesure (M), comprenant un axe optique (A), se compose d'une lentille d'entrée convexe (L₁) avec un diamètre relativement grand (d₁), d'un obturateur (B) pour la délimitation d'une plage d'angles d'incidence à +/-2°-10°, d'une lentille de capteur (L₂) et d'au moins trois capteurs photoélectriques (S₁, S₂, S₃) sensibilisés par des filtres de couleur (F₁, F₂, F₃) à différentes sensibilités spectrales, dans laquelle l'obturateur (B) est situé sensiblement dans le plan focal de la lentille d'entrée (L₁), dans laquelle les filtres (F₁, F₂, F₃) et les capteurs (S₁, S₂, S₃) sont disposés à proximité de l'axe optique (A) et sont soumis à l'effet d'une lumière de mesure parallèle et dans laquelle les filtres (F₁, F₂, F₃) et les capteurs (S₁, S₂, S₃) sont conçus de sorte que les signaux de mesure électriques générés par les capteurs (S₁, S₂, S₃) représentent sensiblement les valeurs chromatiques à triple stimulus XYZ selon la CIE ou une combinaison linéaire de ces valeurs chromatiques à triple stimulus XYZ ;
**caractérisée en ce que** :
l'unité de mesure (M) comprend en outre
un diffuseur optique à action dépolarisante (D),
dans laquelle le diffuseur optique (D) est disposé dans la trajectoire des rayons à proximité immédiate de l'obturateur (B) et sensiblement dans le plan focal de la lentille de capteur (L₂),
dans laquelle le diffuseur (D) est conçu de sorte que les signaux de mesure électriques générés par les capteurs (S₁, S₂, S₃) représentent sensiblement les valeurs chromatiques à triple stimulus XYZ selon la CIE ou une combinaison linéaire de ces valeurs chromatiques à triple stimulus XYZ ;
les capteurs (S₁, S₂, S₃) sont disposés à une distance (s) de la lentille de capteur (L₂) qui correspond sensiblement à la distance focale (f₂) de la lentille de capteur (L₂) ;
l'unité de mesure (M) comprend en outre :
un tube fractionné en trois secteurs (10) avec les composants optiques susmentionnés ;
une électronique de mesure (21) qui commande les capteurs (S₁, S₂, S₃) ;
une carte de circuit imprimé (20) sur laquelle l'électronique de mesure (21) est disposée ; et
une interface de communication (22) sur la carte de circuit imprimé (20) ;
dans laquelle l'électronique de mesure (21) met à disposition de l'interface de communication (22) les signaux de mesure des capteurs (S₁, S₂, S₃) sous forme numérique,
dans laquelle les capteurs (S₁, S₂, S₃) sont montés sur la carte de circuit imprimé (20) et sont reliés électriquement à l'électronique de mesure (21) ; et
dans laquelle la carte de circuit imprimé (20) est fixée à une extrémité du tube (10).

2. Unité de mesure (M) selon l'une quelconque des revendications précédentes, **caractérisée en ce que** l'obturateur (B) délimite la plage d'angles d'incidence à +/-4° à 6°.

3. Unité de mesure (M) selon l'une quelconque des revendications précédentes, **caractérisée en ce qu'**il est prévu, en plus des capteurs (S₁, S₂, S₃), un capteur (S₄) sans filtre de couleur monté en aval.

4. Unité de mesure (M) selon l'une quelconque des revendications précédentes, **caractérisée en ce que** le diffuseur optique (D) est formé en tant que plaquette mince avec une épaisseur de plaquette de 0,2 à 0,6 mm, en particulier d'environ 0,4 mm, et **en ce que** le diffuseur optique (D) est composé de polyoxyméthylène.

5. Unité de mesure (M) selon l'une quelconque des revendications précédentes, **caractérisée en ce que** le diffuseur optique (D) est translucide à au moins 25 %, de préférence à au moins 50 %.

6. Unité de mesure (M) selon l'une quelconque des revendications précédentes, **caractérisée en ce que** le diffuseur optique (D) dépolarise la lumière le traversant à au moins 95 %, de préférence à au moins 99 %.

7. Unité de mesure (M) selon l'une quelconque des revendications précédentes, **caractérisée en ce que** la lentille d'entrée (L₁) présente une distance focale de 20 à 30 mm, en particulier de 24 à 26 mm.

8. Unité de mesure (M) selon l'une quelconque des revendications précédentes, **caractérisée en ce que** la lentille d'entrée (L₁) est optimisée pour reproduire une lumière parallèle en un point.

9. Unité de mesure (M) selon l'une quelconque des revendications précédentes, **caractérisée en ce que** la lentille de capteur (L₂) est optimisée pour reproduire vers l'infini une lumière rayonnée de manière divergente par le diffuseur (D).

10. Unité de mesure (M) selon l'une quelconque des revendications précédentes, **caractérisée en ce que** l'obturateur (B) comprend un diamètre d'ouverture de 3 à 5 mm, en particulier d'environ 4 mm.

11. Unité de mesure (M) selon l'une quelconque des revendications précédentes, **caractérisée en ce que** les filtres de couleur (F₁, F₂, F₃) sont formés en tant que filtres de transmission avec une structure de couches diélectriques.

12. Unité de mesure (M) selon l'une quelconque des revendications précédentes, **caractérisée en ce que** les filtres de couleur (F₁, F₂, F₃) sont positionnés et fixés dans un insert (15) qui cloisonne les filtres de couleur (F₁, F₂, F₃) et les capteurs (S₁, S₂, S₃) les uns par rapport aux autres et les protège contre une soumission à l'effet d'une lumière parasite.

13. Unité de mesure (M) selon l'une quelconque des revendications précédentes, **caractérisée en ce que** la lentille d'entrée (L₁) présente un diamètre (d₁) de 25 mm.

14. Colorimètre portable avec un boîtier (G), dans lequel se trouve une unité de mesure opto-électronique (M) qui reçoit une lumière de mesure provenant d'un objet de mesure par une fenêtre de mesure (5) du boîtier (G), la convertit en des signaux de mesure électriques correspondants, traite ces signaux de mesure en des données de mesure numériques caractérisant la couleur de l'objet de mesure et dispose d'une interface de communication (22), **caractérisée en ce que** l'unité de mesure opto-électronique (M) est formée selon l'une quelconque des revendications précédentes.
